# FASCICULE DE BREVET EUROPEEN

(11) **EP 0 771 132 B1**
(45) Date de publication et mention de la délivrance du brevet: **02.01.2002**
(21) Numéro de dépôt: 96402166.1
(22) Date de dépôt: 11.10.1996
(51) Int. Cl.: H04Q 11/04

(54) **Dispositif de régulation du flux de cellules ATM au sein d'un brasseur ATM**
Anlage zur Regulierung des ATM-Zellenflusses in einer ATM-Vermittlungsstelle
Device for regulating the flow of ATM cells inside an ATM switch

(30) Priorité: 24.10.1995 FR 9512492
(43) Date de publication de la demande: 02.05.1997
(73) Titulaire: Thales, 75008 Paris (FR)
(72) Inventeur: Grenot, Thierry, Thomson CSF, SCPI, 92402 Courbevoie Cedex (FR); Vivant, Colette, Thomson CSF, SCPI, 92402 Courbevoie Cedex (FR); Letourneur, Patrick, Thomson CSF, SCPI, 92402 Courbevoie Cedex (FR)
(74) Mandataire: Lincot, Georges

(56) Documents cités:
- SERVING HUMANITY THROUGH COMMUNICATIONS. SUPERCOMM/ICC, NEW ORLEANS, MAY 1 - 5, 1994, vol. VOL. 1, no. -, 1 Mai 1994, INSTITUTE OF ELECTRICAL AND ELECTRONICS ENGINEERS, pages 402-409, XP000438948 FAN R ET AL: "EXPANDABLE ATOM SWITCH ARCHITECTURE (XATOM) FOR ATM LANS"
- PROCEEDINGS. 19TH CONFERENCE ON LOCAL COMPUTER NETWORKS (CAT. NO.94TH8004), PROCEEDINGS OF 19TH CONFERENCE ON LOCAL COMPUTER NETWORKS, MINNEAPOLIS, MN, USA, 2-5 OCT. 1994, ISBN 0-8186-6680-3, 1994, LOS ALAMITOS, CA, USA, IEEE COMPUT. SOC. PRESS, USA, pages 307-314, XP000575279 MOORS T ET AL: "Implementing traffic shaping"

## Description

La présente invention concerne un dispositif de régulation du flux de cellules ATM au sein d'un brasseur de type ATM, abréviation anglo-saxonne pour Asynchronous Transfer Mode, permettant de résoudre la difficulté de réalisation de circuits points à multipoints pour les flux sporadiques en ATM.

La technique de commutation ATM est reconnue internationalement comme étant à la base des réseaux de télécommunications à larges bandes du proche futur, tant pour les LAN abréviation anglo-saxonne pour Local Area Network, les MAN abréviation anglo-saxonne pour Metropolitan Area Network, les WAN abréviation anglo-saxonne pour Wide Area Network, que pour les réseaux de distribution vers les usagers (professionnels et résidentiels).

Cette technique consiste à brasser, ou commuter, des circuits virtuels transportant des informations de protocole et d'usager. Basée sur un quantum d'information de taille fixe et identifié de façon autonome connu sous le nom de cellule, la technique ATM permet la réalisation de machines aux rôles et aux caractéristiques variés et aux performances importantes.

Une cellule ATM est constituée de deux parties principales :
- un en-tête, identifiant le circuit virtuel auquel appartient la cellule, et protégé par un code détecteur/correcteur d'erreur ; la taille de l'en-tête est fixée à 5 octets par l'UlT, abréviation pour Union Internationale des Télécommunications ;
- la charge utile, véhiculant les informations propres à l'usager et à leur adaptation à l'ATM; la taille de la charge utile est fixée à 48 octets par l'UIT.

On peut classer les types de trafics véhiculés par les réseaux ATM en quatre principales catégories :
- une première catégorie de trafic appelé trafic CBR, abréviation anglo-saxonne pour Constant Bit Rate, correspond au trafic associé à une source à débit constant, émettant donc des cellules à intervalles réguliers (son, image codés à débit fixe, ...);
- une deuxième catégorie correspond à un trafic appelé trafic VBR, abréviation anglo-saxonne pour Variable Bit Rate, et correspond au trafic associé à une source à débit variable, dont la variation dépend des caractéristiques instantanées de la source (images codée à débit variable, ...);
- une troisième catégorie correspond à un trafic appelé trafic UBR, abréviation anglo-saxonne pour Unspecified Bit Rate,. et correspond au trafic associé à une source dont les caractéristiques sont a priori non spécifiées. Ce type de trafic est typiquement associé à des sources de type transfert de fichiers informatiques, fortement sporadiques, sans contraintes fortes de temps de transfert, mais nécessitant un très faible taux de perte d'informations. On veut en général pouvoir utiliser toute la bande passante. laissée disponible par les flux CBR/VBR ; c'est ce que l'on nomme le fonctionnement "best effort" connu sous l'abréviation BE ; et
- une quatrième catégorie correspond à un trafic appelé trafic ABR, abréviation anglo-saxonne pour Available Bit Rate, correspondant au trafic UBR mais dont les sources sont contraintes par un contrôle de flux propre à la couche ATM.

Typiquement, aux trafics de type CBR et VBR correspondent des hypothèses statistiques conduisant à des structures de brassage relativement simples, caractérisées d'une part par l'absence de contrôle de flux, et d'autre part par un faible nombre de "buffers", (buffer étant la terminologie anglo-saxonne couramment utilisée pour définir une mémoire tampon), pour un taux de perte lui-même extrêmement petit. Pour garantir ces hypothèses statistiques, le trafic est "réservé" par une fonction d'allocation des ressources du commutateur, et éventuellement vérifié par une fonction de police d'accès au commutateur.

Une architecture type connue sous l'appellation anglo-saxonne "output buffering", consiste à mettre des mémoires tampons en aval du système de multiplexage (bus, anneau, matrice ...). Cette architecture se prête bien à la réalisation de circuits points à multipoints CBR et VBR, puisqu'il suffit de sélectionner simultanément plusieurs sorties pour effectuer la copie multiple d'une seule cellule. Les circuits points à multipoints correspondent à des circuits à un port d'entrée et plusieurs ports de sortie, chaque port de sortie délivrant la même information. Ils sont utilisés pour rendre des services nécessitant la diffusion générale ou sélective d'informations vers plusieurs destinataires : diffusion d'image ou de son, protocole de routage de type réseau local,...

Le trafic UBR diffère des trafics CBR et VBR en ce que le débit des sources n'est pas, ou peu contraint. II n'est alors plus possible de compter sur un comportement statistique stable à court terme. La présence de flux UBR/ABR nécessite des "grands" buffers du fait de la sporadicité du trafic. Ces grands buffers ont une capacité mémoire typiquement de quelques milliers à quelques dizaines de milliers de cellules. Selon l'architecture du brassage, il faut y adjoindre des buffers de sortie que l'on peut souhaiter garder "petits" pour des questions de vitesse, donc de coût de la mémoire. Ces petits buffers ont une capacité mémoire typiquement de quelques dizaines à quelques centaines de cellules. Dans ce cas, un dispositif de contrôle de flux interne permet de bloquer la sortie des "grands" buffers lorsque les "petits" buffers sont pleins. On compte alors sur des protocoles de transport de bout en bout pour limiter la charge offerte dans les limites de capacité des "grands" buffers.

L'emplacement de ces "grands" buffers diffère selon les architectures ; ils sont en général situés en entrée (input buffering), ou au centre du brasseur (central buffering).

Le trafic ABR introduit un contrôle de flux entre les sources et les commutateurs (ou les destinations) qui permet de contraindre les sources dans des limites supportables par les équipements du réseau, et par là de garantir un fonctionnement global sans perte.

L'implémentation matérielle de circuits points à multipoints au sein de brasseurs/commutateurs ATM est caractérisée, par son niveau de complexité et donc de coût, et par son niveau de performance concernant le débit offert, l'utilisation répétée des ressources de brassage, copies multiples des cellules, ... Les implémentations actuelles de tels circuits proposent des solutions matérielles complexes et donc de coût élevé.

Par exemple, le document « Serving humanity through communications supercomm/icc, New Orleans, May 1-5, 1994, vol.1,n°.-,1 Mai 1994,Institute of Electrical and Electronics Engineers, pages 402-409, XP000438948 FAN R et al :'Expandable ATOM switch architecture (XATOM) for ATM LANs ', divulgue un mécanisme qui met en oeuvre un contrôle de flux interne par utilisation d'un signal « backpressure » bloquant la sortie des buffers d'entrée lorsque les buffers de sortie sont pleins. L'inconvénient d'un tel système est qu'il conduit à l'utilisation de grands buffers d'entrée.

Le document Proceedings. 19 TH conference on local computer networks (Cat.NO.94 TH8004), proceedings of 19 TH conference on local computer networks, Minneapolis, MN, USA, 2-5 oct.1994, ISBN 0-8186-6680-3, 1994, Los Alamitos, CA, USA, IEEE Comput.Soc.Press,USA, pages 307-314, XP000575279 Moors T et al :'Implementing traffic shaping' présente des considérations générales sur l'égrenage .

L'invention a pour but de pallier cet inconvénient.

A cet effet, l'invention a pour objet un dispositif de régulation du flux de cellules ATM au sein d'un brasseur ATM du type comportant un multiplexeur associé à un nombre déterminé de buffers d'entrée et de sortie et un dispositif de contrôle des flux internes de cellules ATM indiquant aux buffers d'entrée l'état de congestion des buffers de sortie. Il est caractérisé en ce qu'il comporte des moyens de conversion du flux des cellules sporadiques, point à multipoint, arrivant en entrée des buffers d'entrée, lesdits moyens de conversion étant disposés et comportant dans chaque buffer d'entrée un dispositif d'égrenage permettant de libérer des cellules points à multipoints régulièrement en direction du multiplexeur, en formant un flux régulier de cellules quelque soit la direction sortante qu'empruntent les cellules et de façon indépendante pour chaque entrée.

L'invention a pour avantage d'offrir une solution matérielle simple et économique pour l'implémentation de circuits points à multipoints au sein de brasseurs/commutateurs ATM.

D'autres avantages et caractéristiques de la présente invention apparaîtront plus clairement à la lecture de la description qui suit faite en référence aux figures annexées qui représentent :
- la figure 1, une architecture générale d'un brasseur ATM, et
- la figure 2, une architecture d'un dispositif de régulation du flux de cellules ATM selon l'invention, au sein d'un brasseur ATM.

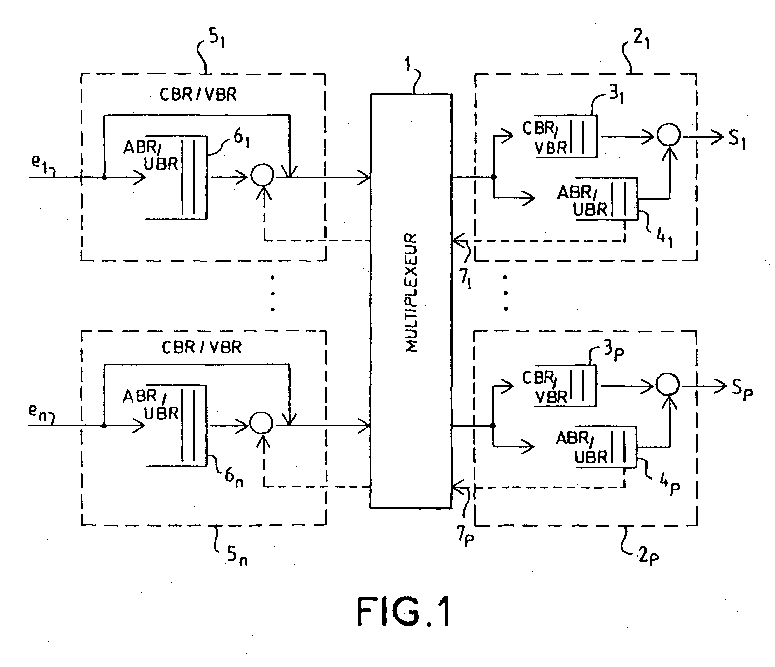

L'architecture générale illustrée à la figure 1 décrit une implémentation de la fonction de diffusion ATM pour des circuits points à multipoints adaptés aux trafics UBR et ABR au sein d'un brasseur ATM.

Le brasseur est constitué de :
- un étage de brassage proprement dit, constitué d'un multiplexeur 1 réalisé à partir d'un bus, un anneau, ..., et d'un nombre déterminé P de "petits" buffers 2_{P}, avec P = 1 à p, de bande passante élevée de l'ordre de n+1 fois le débit des liens d'accès (n étant égal au nombre d'entrées), situés en sortie du multiplexeur 1 et délimités par une ligne fermée discontinue ; cette partie du brasseur est donc a priori dédiée au flux des trafics CBR et VBR appelés ci-après flux CBR/VBR ; ces buffers sont organisés en au moins deux niveaux de priorité : le plus élevé étant dédié aux flux CBR/VBR et le plus faible aux flux des trafics ABR/UBR, appelés ci-après flux ABR/UBR. Une première file d'attente 3₁ étant dédiée aux flux CBR/VBR et une deuxième file d'attente 4₁ aux flux ABR/UBR.
- un nombre déterminé N de "grands" buffers 5_{N}, avec N =1 à n, situés en amont du multiplexeur 1 et délimités par une ligne fermée discontinue, dans lesquels les cellules des flux ABR et UBR sont rangées dans une file d'attente 6_{N} avant d'être orientées vers la ou les destinations convenables ; on peut remarquer que ces buffers 5_{N} ont une bande passante relativement faible (environ deux fois le débit du lien), et peuvent donc être constitués de mémoire "à faible coût" ; et
- un dispositif de contrôle de flux interne 7_{P}, permettant aux files d'attente de sortie 4p dédiées aux trafics ABR/UBR d'indiquer leur état de congestion "presque pleines" aux buffers d'entrée 5_{N}. Les états de congestion des différentes files d'attente de sortie 4p sont utilisées pour les flux UBR et ABR, par les entrées du multiplexeur 1 pour déterminer s'il est possible d'émettre une cellule ou non vers ces sorties.

Seul le mécanisme de brassage est décrit dans la présente invention. La façon dont la couche ATM est traitée : traduction, police, OAM abréviation anglo-saxonne pour "Operation And Maintenance", ..., ainsi que les mécanismes de gestion des buffers d'entrée ou de sortie, ne sont pas décrits.

Dans une telle architecture, les différents flux sont traités typiquement de la façon suivante

Concernant les flux CBR et VBR points à points, les cellules sont émises dès leur arrivée vers la file d'attente de la sortie sélectionnée, quel que soit son état de remplissage ; en particulier, si elle est saturée, les cellules seront perdues.

Concernant les flux CBR et VBR points à multipoints, les cellules sont émises dès leur arrivée vers la file d'attente des sorties sélectionnées, quel que soit leur état de remplissage ; en particulier, si certaines d'entre elles sont saturées, les cellules correspondantes seront perdues.

Concernant les flux ABR et UBR points à points, les cellules sont mémorisées dans un buffer d'entrée, puis envoyée dans les buffers de sortie du port sélectionné lorsque celui-ci est disponible ; il n'y a donc pas de perte dans la file d'attente de sortie.

Concernant les flux ABR et UBR points à multipoints, le procédé utilisé par les flux CBR et VBR ne peut être utilisé. Il y a un risque de perdre des cellules, étant donné la nature très sporadique de ces flux. Il en va de même du mécanisme ABR/UBR point à point : il n'est pas garanti que l'on puisse trouver un instant où l'ensemble des directions sélectionnées soit disponible simultanément.

Une première solution au problème posé par les flux ABR et UBR point à multipoint serait de transformer ces flux en flux ABR/UBR point à point, en copiant les cellules et en les retransmettant une à une dans les files de sortie lorsque celles-ci sont disponibles. Une telle solution présente l'inconvénient de multiplier l'usage des ressources de brassage par le nombre de destinations.

Un dispositif selon l'invention remédiant à cet inconvénient comporte des moyens pour transformer les flux ABR/UBR points à multipoints en flux CBR/VBR points à multipoints et pour les émettre vers la fonction de brassage en tant que telle.

Pour ce faire, les flux ABR/UBR points à multipoints sont dérivés vers un dispositif d'égrenage, qui libère les cellules selon un mode simple dont la statistique peut être prise en compte par la fonction d'allocation des ressources du commutateur au même titre que pour les flux CBR/VBR.

Le mode d'égrenage le plus simple consiste à libérer les cellules points à multipoints régulièrement par exemple sur un événement de type temporisation, quelles que soient les directions sortantes qu'elles empruntent et de façon indépendante pour chaque entrée. La valeur du temporisateur permettant l'égrenage est programmable par un organe de commande du commutateur, et est choisie en fonction de données telles que les caractéristiques a priori des flux ABR/UBR points à multipoints, les caractéristiques mesurées des flux ABR/UBR points à multipoints, ...

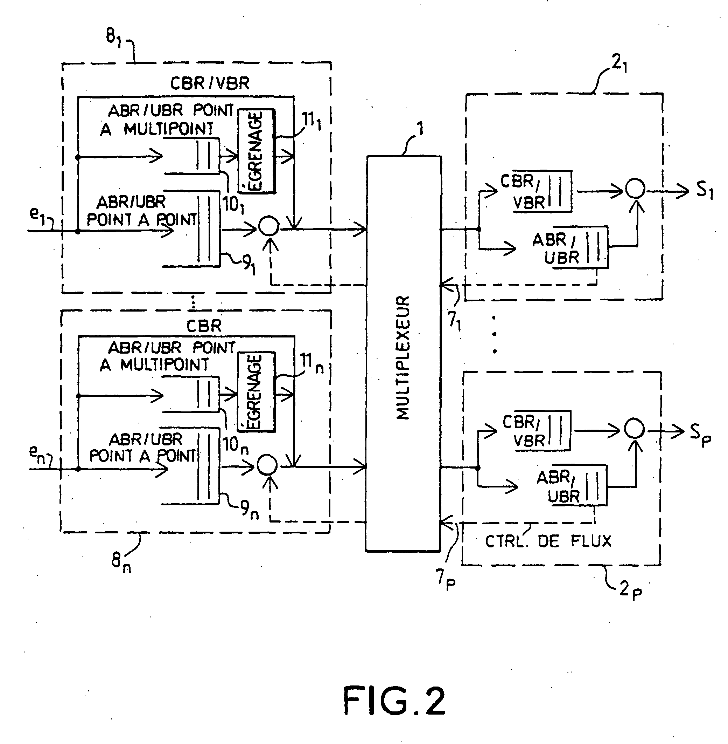

La figure 2 illustre l'architecture d'un dispositif de brassage selon l'invention. Sur la figure 2, les éléments homologues à ceux de la figure 1 sont désignés par les mêmes repères. Chaque buffer d'entrée 8_{N}, N = 1 à n, comporte une première file d'attente dédiée au trafic ABR/UBR point à point 9_{N} et une deuxième file d'attente dédiée au trafic ABR/UBR point à multipoint 10_{N}. Le flux de cellules émises par l'intermédiaire de la deuxième file d'attente 10_{N} est dérivé vers un dispositif d'égrenage 11_{N}. Le dispositif d'égrenage 11_{N} libère ensuite les cellules en flux CBR/VBR en direction du port d'entrée du multiplexeur 1. La fonction d'allocation des ressources de commutateur prend en compte la valeur d'égrenage de chaque buffer d'entrée relatif à un point d'entrée du multiplexeur 1 pour tenir à jour une charge CBR/VBR réservée, et la maintenir à l'intérieur de limites déterminées permettant la garantie du bon fonctionnement du brasseur à partir des hypothèses statistiques liées à ces flux.

La charge ainsi réservée CBR/VBR correspond à la somme des débits réservés pour les trafics CBR/VBR réels, c'est-à-dire les trafics CBR/VBR d'origine points à multipoints, auxquels sont rajoutés les débits d'égrenage pour les trafics ABR/UBR points à multipoints.

Le débit CBR/VBR ainsi réservé est un majorant : il n'y a que peu de chances que l'ensemble des accès e_{N} ait à diffuser simultanément vers toutes les directions avec un débit égal à celui du dispositif d'égrenage 11_{N}. Cependant, on peut remarquer que la partie éventuellement réservée "en trop" peut tout à fait être utilisée pour les flux ABR/VBR points à points (en cela, on retrouve la notion de "best effort").

On peut limiter néanmoins cette réservation "en trop", ou "sur-réservation", en introduisant des modes de fonctionnement plus complexes. Parmi ceux-ci, un tri par groupe de directions pour permettre l'émission simultanée de plusieurs cellules vers des directions différentes sans réserver plusieurs fois la ressource CBR nécessaire, une corrélation entre les dispositifs d'égrenage 11_{N} pour permettre la mise en commun de la ressource CBR réservée, etc.

On peut aussi moduler le débit d'égrenage des flux UBR/ABR multipoints en fonction de la charge instantanée en flux CBR/VBR, ce qui nécessiterait une mesure en temps réel de cette charge mais qui aurait l'avantage de se rapprocher du fonctionnement en "complément" du flux CBR/VBR.

## Revendications

1. Dispositif de régulation du flux de cellules ATM au sein d'un brasseur ATM du type comportant un multiplexeur (1) associé à un nombre déterminé de buffers d'entrée (8_{N}) et de sortie (2p) et un dispositif de contrôle (7_{P}) des flux internes de cellules ATM indiquant aux buffers d'entrée (8_{N}) l'état de congestion (11_{P}) des buffers de sortie (2_{P}), **caractérisé en ce qu'**il comporte :
• des moyens de conversion du flux des cellules sporadiques, point à multipoint, arrivant en entrée des buffers d'entrée (e_{N}),
• lesdits moyens de conversion étant disposés dans chaque buffer d'entrée et comportant dans chaque buffer d'entrée (8_{N}), un dispositif d'égrenage (11_{N}) permettant de libérer des cellules points à multipoints régulièrement en direction du multiplexeur (1), en formant un flux régulier de cellules quelque soit la direction sortante qu'empruntent les cellules et de façon indépendante pour chaque entrée (e_{N}).

2. Dispositif selon la revendication 1 **caractérisé en ce que** la cadence de l'égrenage est programmée par un organe de commande du brasseur ATM.

## Patentansprüche

1. Vorrichtung zur Regelung des Flusses von ATM-Zellen in einer ATM-Vermittlungsstelle, die einen Multiplexer (1) in Verbindung mit einer bestimmten Anzahl von Eingangs-Pufferspeichern (8_{N}) und Ausgangs-Pufferspeichern (2_{P}) sowie eine Steuervorrichtung (7_{P}) für die internen Datenflüsse von ATM-Zellen enthält, die den Eingangs-Pufferspeichern (8_{N}) den Füllstand der Ausgangs-Pufferspeicher (2_{P}) angibt,
**dadurch gekennzeichnet,**
• **daß** sie Mittel zur Umwandlung des Flusses der sporadischen Zellen von einem Punkt zu Mehrfachpunkten aufweist, die am Eingang (e_{N}) der Eingangs-Pufferspeicher (8_{N}) ankommen,
• wobei die Umwandlungsmittel in jedem Eingangs-Pufferspeicher liegen und in jedem Eingangs-Pufferspeicher (8_{N}) eine Entnahmevorrichtung (11_{N}) enthalten, die es erlaubt, Zellen von einem Punkt an Mehrfachpunkte regelmäßig in Richtung des Multiplexers (1) freizugeben, indem ein gleichmäßiger Fluß von Zellen unabhängig von der Ausgangsrichtung der Zellen und unabhängig für jeden Eingang (e_{N}) gebildet wird.

2. Vorrichtung nach Anspruch 1, **dadurch gekennzeichnet, daß** die Folgegeschwindigkeit der Entnahme durch ein Steuerorgan der ATM-Vermittlungsstelle programmiert wird.

## Claims

1. Device for regulating the flow of ATM cells within an ATM cross-connect panel of the type comprising a multiplexer (1) associated with a specified number of input (8_{N}) and output (2_{P}) buffers and a control device (7_{P}) for controlling the internal flows of ATM cells indicating to the input buffers (8_{N}) the state of congestion (11_{P}) of the output buffers (2_{P}), **characterized in that** it comprises:
• means of conversion of the flow of the sporadic point-to-multipoint cells arriving at the input of the input buffers (e_{N}),
• the said means of conversion being disposed in each input buffer and comprising in each input buffer (8_{N}), a shelling device (11_{N}) making it possible to free point-to-multipoint cells regularly towards the multiplexer (1), forming a regular flow of cells regardless of the outgoing direction taken by the cells and independently for each input (e_{N}).

2. Device according to Claim 1, **characterized in that** the rate of shelling is programmed by a control unit of the ATM cross-connect panel.
